# EUROPEAN PATENT APPLICATION

(11) **EP 4 629 095 A1**
(43) Date of publication of application: **08.10.2025**
(21) Application number: 23896561.0
(22) Date of filing: 17.11.2023
(51) Int. Cl.: G06F 16/22, G06F 16/28

(54) **DATA PROCESSING METHOD AND DATA PROCESSING SYSTEM**

(30) Priority: 30.11.2022 CN 202211513575
(71) Applicant: Cloud Intelligence Assets Holding (Singapore) Private Limited, Singapore 189554 (SG)
(72) Inventor: WANG, Qi, Hangzhou, Zhejiang 310030 (CN); JIA, Yangqing, Hangzhou, Zhejiang 310030 (CN); JIANG, Weihua, Hangzhou, Zhejiang 310030 (CN); JIANG, Guangran, Hangzhou, Zhejiang 310030 (CN); ZHOU, Biao, Hangzhou, Zhejiang 310030 (CN); ZHU, Zhanyan, Hangzhou, Zhejiang 310030 (CN); YANG, Yuanqin, Shanghai 201210 (CN)
(74) Representative: Barker Brettell LLP
(86) International application number: PCT/CN2023/132294
(87) International publication number: WO 2024/114409

(57) **Abstract**

The present disclosure relates to a data processing method and a data processing system. The data processing system includes: a plurality of computing groups, where computing resources of each computing group are mutually isolated; where a computing group with a write function maintains a first memory table, the computing group with the write function is configured to write data to be stored into a data storage into the first memory table, and write data in the first memory table into a physical table in the data storage corresponding to the first memory table; and each computing group further maintains at least one second memory table respectively, each second memory table corresponds to a respective first memory table in other computing groups with a write function. The computing group is configured to synchronize the second memory table with its corresponding first memory table. Thus, the data processing system disclosed by the present disclosure can conveniently and flexibly realize the isolation of computing resources in a case that computing groups used in various scenarios or tasks share data.

## Description

This application claims priority to Chinese Patent Application No. 202211513575.4, filed to the China National Intellectual Property Administration on November 30, 2022 and entitled "DATA PROCESSING METHOD AND DATA PROCESSING SYSTEM", which is hereby incorporated by reference in its entirety.

### TECHNICAL FIELD

The present disclosure relates to a data processing method and system and, in particular, to reading, writing and analysis processing of massive data.

### BACKGROUND

With the sustained and rapid development of the Internet field, requirements for writing, reading and analysis processing of massive data are getting higher and higher.

A one-stop real-time data warehouse engine has been proposed, which supports real-time writing, real-time updating and real-time analysis of the massive data, supports a standard SQL (Structured Query Language), supports multidimensional online analysis (OLAP) and Ad Hoc analysis (Ad Hoc) of Petabyte-level (1 PB = 1024 TB = 2⁵⁰ bytes) data, supports an online data service with high concurrency and low delay, and provides an offline/online integrated full-stack data warehouse solution.

However, when users use the data warehouse engine to serve a real-time scenario, an analysis scenario, a service scenario, an offline processing scenario and other scenarios at the same time, the problem of load conflict of system computing resources in different scenarios is encountered, and the high availability of user services is further affected.

Therefore, an improved data processing solution is still needed to deal with the above technical problem.

### SUMMARY

A technical problem to be solved by the present disclosure is to provide a data processing method and a data processing system, which can conveniently and flexibly realize the isolation of computing resources under the condition that the computing resources used in various scenarios or tasks share data.

According to a first aspect of the present disclosure, a data processing system is provided, including: a plurality of computing groups, where computing resources of each computing group are mutually isolated; where a computing group with a write function maintains a first memory table, the computing group with the write function is configured to write data to be stored into a data storage into the first memory table, and write data in the first memory table into a physical table in the data storage corresponding to the first memory table; and where each computing group further maintains at least one second memory table respectively, each second memory table corresponds to a respective first memory table in other computing groups with a write function, and the computing group is configured to synchronize the second memory table with its corresponding first memory table.

Optionally, the data processing system further includes: a gateway, configured to allocate a task request to a computing group corresponding to the task request; and/or a metadata storage, configured to manage metadata of a physical table in the data storage and provide metadata services for the plurality of computing groups, where the plurality of computing groups share the metadata; and/or the data storage, configured to store the physical table.

Optionally, the metadata storage is further configured to manage computing group configuration information, and the system further includes: a data engine controller, configured to, in response to an instruction of a user or the number of task requests, perform at least one of the following operations: creating a computing group, and storing the computing group configuration information into the metadata storage; enabling a new computing group to perform corresponding data processing based on the computing group configuration information in the metadata storage; suspending the computing group, so that the computing group no longer performs the data processing; destroying the computing group, and releasing computing resources allocated to the computing group; adjusting the computing resources allocated to the computing group; adjusting computing resources allocated to each computing subgroup in the computing group; and adding or reducing computing subgroups in the computing group, where the computing resources of each computing subgroup are mutually isolated, and each computing subgroup maintains the first memory table and/or the second memory table respectively.

Optionally, the physical table stores data in a way of row-column coexistence, and row data and column data corresponding to the same data are written into the same physical table through a writing task, to ensure atomicity of a row data writing operation and a column data writing operation corresponding to the same data.

Optionally, the computing group includes at least one of the following: a computing group for offline writing; a computing group for real-time writing; a computing group for providing a data query service; and a computing group for providing a data analysis service.

Optionally, the computing group with the write function maintains a plurality of first memory tables, where the plurality of first memory tables correspond to a plurality of physical tables in the data storage; each computing group maintains a corresponding number of second memory tables, to correspond to a plurality of first memory tables in other computing groups with the write function.

Optionally, in response to unavailability of the computing group, in a case that other computing groups performing the same task exist, a task request directed to an unavailable computing group is redirected to a computing group performing the same task, or a new computing group is enabled based on computing group configuration information of the unavailable computing group in the metadata storage to perform a corresponding task request.

Optionally, in response to unavailability of a computing subgroup in the computing group, a new computing subgroup is created in the computing group and/or a task request directed to the unavailable computing subgroup is switched to other computing subgroups in the computing group.

Optionally, in response to unavailability of a computing node in the computing group, a task request directing to the unavailable computing node is switched to other computing nodes in the computing group, and the first memory table and/or the second memory table already existed in the unavailable computing node are rebuilt in other computing nodes.

According to a second aspect of the present disclosure, a data processing method is provided, including: providing a plurality of computing groups, where computing resources of each computing group are mutually isolated; maintaining, by a computing group with a write function, a first memory table; writing, by the computing group with the write function, data to be stored into a data storage into a first memory table, and writing the data in the first memory table into a physical table in the data storage corresponding to the first memory table; maintaining, by each computing group, at least one second memory table respectively, where each second memory table corresponds to other computing groups with a write function; and synchronizing the second memory table with its corresponding first memory table in the computing group.

According to a third aspect of the present disclosure, a computing device is provided, including: a processor; and a memory, storing executable codes, where the executable codes, when executed by the processor, cause the processor to perform the method as described in the first aspect.

According to a fourth aspect of the present disclosure, a computer program product is provided, which includes executable codes, where the executable codes, when executed by a processor of an electronic device, cause the processor to perform the method as described in the first aspect.

According to a fifth aspect of the present disclosure, a non-transitory machine-readable storage medium is provided, storing executable codes, where the executable codes, when executed by a processor of an electronic device, cause the processor to perform the method as described in the first aspect.

Therefore, the data processing system disclosed by the present disclosure can conveniently and flexibly realize the isolation of computing resources in a case that computing groups used in various scenarios or tasks share data.

### BRIEF DESCRIPTION OF DRAWINGS

The above and other objects, features and advantages of the present disclosure become more apparent by describing exemplary implementations of the present disclosure in more detail with reference to the drawings, where the same reference number generally represents the same component in exemplary implementations of the present disclosure.
FIG. 1 schematically shows a data processing system architecture according to the present disclosure.
FIG. 2 schematically shows a flowchart of a data processing method according to the present disclosure.
FIG. 3 shows a schematic structural diagram of a computing device that can be used to implement the above data processing method according to an embodiment of the present invention.

### DESCRIPTION OF EMBODIMENTS

Preferably implementations of the present disclosure are described in more detail below with reference to the drawings. Although preferably implementations of the present disclosure are shown in the drawings, it should be understood that the present disclosure can be realized in various forms and should not be limited by the implementations described here. On the contrary, these implementations are provided to make the present disclosure more thorough and complete, and to fully convey the scope of the present disclosure to those skilled in the art.

In order to solve the aforementioned problem of load conflict between computing resources, the present disclosure proposes a solution of computing resource isolation, which decomposes the computing resources into different computing groups.

In some cases, a computing group can also be called a "virtual data warehouse (Virtual Warehouse)". Data and metadata can be shared among computing groups, and physical files in a data storage can be completely reused.

A computing group may be composed of, for example, a set of computing nodes of a data warehouse system architecture. A user can flexibly customize the size of each computing group as needed. Core capabilities such as resource isolation, flexibility, computing multi-activity, and high availability are provided to the user.

The user can apply for a plurality of computing groups, and each computing group shares the same data. The user can expand the number and configuration of computing groups as needed, but only need to store and manipulate one copy of data.

A data processing solution according to the present disclosure is described in detail with reference to the drawings.

### 1. Computing resources isolation.

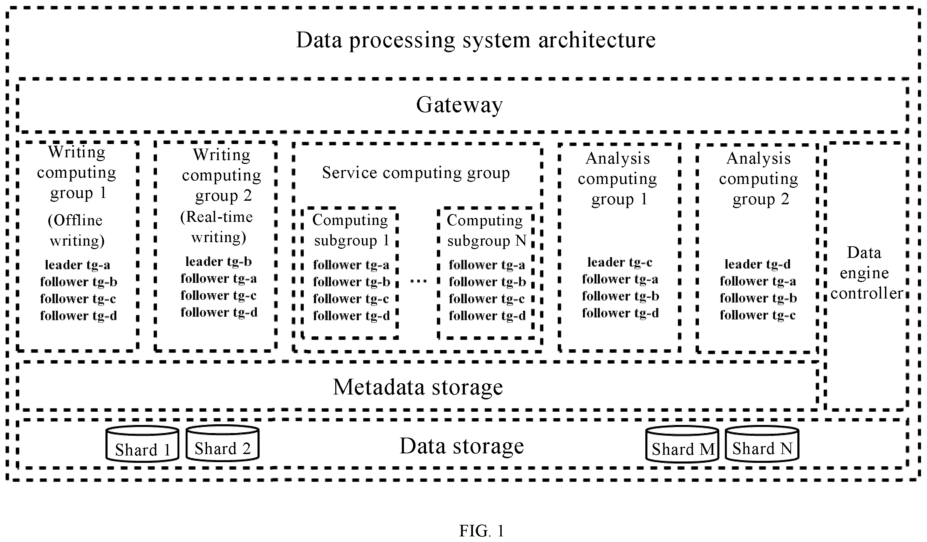

FIG. 1 schematically shows a data processing system architecture according to the present disclosure.

The data processing system architecture can be used as a data warehousing (i.e., data warehouse) architecture. According to the present disclosure, the system architecture can support real-time writing processing and real-time analysis processing, which can also be called as "real-time data warehouse".

As shown in FIG. 1, the system architecture can set up a plurality of computing groups according to needs, applications or configurations of the user, and allocate computing resources to these computing groups, and the computing resources of each computing group are mutually isolated.

For example, the computing resources of the computing group can be divided into a plurality of computing nodes, or called as a "worker (worker)". Or, the computing resources of the computing group can also be measured according to the number of CPUs (or called as "core (core)") allocated thereto, such as 4-core (4 core), 16-core, 32-core, etc.

In an embodiment, a computing group may include a plurality of container groups (pod), and a pod may serve as a computing node or a worker (worker). For example, a pod with 16-core can be set as a basic computing resource group, and the number of pods in each computing group can be set as needed.

The computing resources in a computing group can be further divided into a plurality of computing subgroups, or called as a "cluster (cluster)", and the computing resources of each computing subgroup are mutually isolated.

In an embodiment, a plurality of pods in a computing group can be divided into a plurality of computing subgroups. In other words, each computing subgroup in the computing group includes a plurality of pods respectively.

In this way, the computing subgroup can have resources equivalent to a general computing group, such as a computing node (container), a CPU, a memory, etc. The computing resources between computing subgroups are mutually isolated, just like that between computing groups. Only computing subgroups belonging to the same computing group can, for example, have the same configuration, and can process task requests in the same type or in the same scenario. The system can expand or reduce the number of computing subgroups in the computing group as needed to adapt to the change of task request traffic.

Different computing groups (or different computing subgroups) do not share the same computing node, therefore, there is no resource competition and performance impact between querying or writing tasks running in different computing groups (or different computing subgroups). This can ensure that the performance of querying and/or writing of different loads does not affect each other, and achieve good resource isolation.

As described above, the computing groups can be independently and flexibly expanded, for example, the computing resources can be flexibly allocated to create computing groups as needed.

A configuration of the computing group can be set according to the user's requirements and/or task request traffic.

Resources owned by these computing groups (i.e., functions executed and the like) can be flexibly configured based on corresponding scenarios.

Multiple queries can run concurrently in each computing group, and each querying request is routed to a computing group for performing.

Querying or writing tasks of different loads (for example, involving different types, different scenarios, or different applications) of the user can run in different computing groups, and the computing resources between computing groups are independent (that is, isolated) from each other.

Task types performed by each computing group can also be flexibly configured by the user. By configuring different computing groups, different types of tasks, or tasks involving different scenarios or different applications are performed, which can realize computing resources isolation between tasks of different types, different scenarios or different applications.

For example, some computing groups can be dedicated to performing a writing operation and have a function of writing data into the data storage, such as a writing computing group 1 for performing an offline writing task and a writing computing group 2 for performing a real-time writing task as shown in FIG. 1.

For another example, some computing groups can perform a reading operation and have a function of reading data from the data storage, such as a service computing group as shown in FIG. 1.

For another example, some computing groups can be used to perform a data analysis operation, can have a function of reading data from data storage, and in some cases, can also have a function of writing data such as analysis results to data storage, such as an analysis computing group 1 and an analysis computing group 2 as shown in Figure 1.

In this way, the user can realize multiple isolation ways based on the computing groups.

For example, a writing-writing isolation can be realized, such as mutual isolation (separation) between different real-time writing tasks, mutual isolation (separation) between different offline writing tasks, and isolation (separation) between a real-time writing task and an offline writing task.

For another example, a reading-writing isolation can be realized, such as a reading-writing isolation between writing tasks such as real-time writing and offline writing, etc., and reading tasks such as service analysis, ad hoc analysis and online analysis, etc.

For another example, a reading-reading isolation can be realized, such as a reading- reading isolation between different reading tasks such as service analysis, ad hoc analysis and online analysis, etc.

For another example, an application scenario isolation can be realized. For example, an instance of the user may be used by multiple work departments, and the multiple departments could analyze and process data in different ways, different logic and different emphases. For example, a financial department may analyze and process the data from a perspective of financial data analysis, and a marketing department may analyze and process the data from a perspective of product sales. Therefore, data processing tasks of multiple work departments can be isolated according to different computing groups, and different work departments correspond to different computing groups, so as to realize complete resources isolation between work departments and avoid related influence between application scenarios or work fields.

Of course, the writing-writing isolation, the reading-writing isolation, the reading-reading isolation and so on can be further carried out within each work department, so that ways of flexible multiple resources isolation can be realized.

For example, one user can correspond to one enterprise, and each department in the enterprise can share enterprise data. In a special case that some different enterprises can share data, a data processing system architecture instance created by the user can also be used by these enterprises that can share the data. In this case, different computing groups can be allocated to each enterprise to isolate computing resources that perform a data processing task for each enterprise.

### 2. Data sharing under the computing resources isolation.

As described above, respective computing resources of the plurality of computing groups are mutually isolated. On the other hand, data stored in the data storage should be shared among mutually isolated computing groups. For example, one user applies for a plurality of computing groups to process data, and these computing groups will perform processing such as writing data, modifying data, and reading data on physical tables in the data storage. It is necessary to allow these computing groups to share data in the physical tables in real-time.

Therefore, a computing group with a write function can maintain a first memory table, write data to be stored into the data storage into the first memory table, and write data in the first memory table into a physical table in the data storage corresponding to the first memory table.

The first memory table can also be called as a "master table" or a "leader (leader) table".

On the other hand, each computing group also maintains at least one second memory table respectively, each second memory table corresponds to a respective first memory table in other computing groups with a write function, and each computing group is configured to synchronize the second memory table maintained by the computing group with its corresponding first memory table.

The second memory table can also be called a "slave table" or a "follower (follower) table".

In practice, the computing group with the write function can maintain a plurality of first memory tables, where the plurality of first memory tables correspond to a plurality of physical tables in the data storage. A plurality of tables involved in one computing group can be called as a "table group (table group)", a plurality of memory tables can be called as a "memory table group", and a plurality of physical tables corresponding thereto can be called as a "physical table group". A plurality of first memory tables maintained by one computing group can be called as a "first memory table group".

For example, the computing group can include 4 computing units and maintain a table group including 16 first memory tables, and these first memory tables can be evenly allocated in each computing unit, that is, each computing unit can maintain 4 first memory tables. Assuming that in the data storage, the computing group corresponds to 2 shards (shard). 16 physical tables corresponding to the 16 first memory tables can be evenly allocated in the 2 shards, for example, 8 physical tables are in each shard.

Accordingly, a corresponding number of second memory tables are maintained in each computing group, which can be called as a "second memory table group" for example, so as to correspond to a plurality of first memory tables (i.e., a first memory table group) in other computing groups with a write function.

In addition, in a case that the computing group is divided into a plurality of computing subgroups, each computing subgroup can also maintain the first memory table and/or the second memory table respectively like the computing group.

Generally speaking, the concept of a "table group" includes a corresponding memory table group and a physical table group. In the context of the present disclosure, a first memory table group in the computing group corresponds to a physical table group in the data storage, and the computing group writes data in the first memory table group into a corresponding physical table group. And a second memory table group in the computing group corresponds to a physical table group by being associated/synchronized with the first memory table group.

In the example shown in FIG. 1, the writing computing group 1 for offline writing maintains a first memory table group "leader tg-a", and each of other computing groups maintains its corresponding second memory table group "follower tg-a".

When data needs to be stored into the writing computing group 1, the writing computing group 1 writes the data into the first memory table group "leader tg-a" and writes the data in the first memory table group "leader tg-a" into a corresponding physical table group in data shard (shard) 1 corresponding to the writing computing group 1 in the data storage.

As the first memory table group "leader tg-a" changes, a corresponding second memory table "follower tg-a" in each of other computing groups can be quickly synchronized with the first memory table group "leader tg-a", so as to have the same data. At present, the delay of this synchronization can be low enough, and the synchronization for 99% of data changes can be completed within 5ms.

Similarly, the writing computing group 2 maintains a first memory table group "leader tg-b", the analysis computing group 1 maintains a first memory table group "leader tg-c" and the analysis computing group 2 maintains a first memory table group "leader tg-d". Each computing group maintains corresponding second memory table group tables "follower tg-b", "follower tg-c" and "follower tg-d" respectively.

In this way, sharing of memory data between different computing groups can be realized quickly and effectively under the condition of computing resources isolation, so as to realize sharing of all data.

In the example shown in FIG. 1, each computing group (or computing subgroup) with write a function, such as writing computing group 1, does not maintain a second memory table corresponding to the first memory table maintained by itself. However, this is not necessary. In some cases, a second memory table corresponding to the first memory table maintained by itself can be maintained in the computing group. Preferably, a corresponding first memory table (such as "leader tg-a") and second memory table (such as "follower tg-a") in the same computing group (or the sane computing subgroup) can be arranged in different computing nodes (such as a worker (worker)) of the computing group (or computing subgroup).

### 3. Overall system architecture.

As shown in FIG. 1, the data processing system architecture can also include a gateway, a metadata storage and a data storage.

The gateway allocates a task request to a computing group corresponding to the task request.

For example, the gateway can allocate a task request to a corresponding computing group according to a type of the task request, a scenario or application to the task request, computing group pointing information contained in the task request, etc.

The data storage, that is, a physical storage system, for example, can be a centralized or distributed storage system, which is used to store physical tables.

The data processing system of the present disclosure completely separates computation and storage in the technical architecture. For example, a computing system and a storage system can be constructed based on the cloud, which can make full use of cloud characteristics and have great advantages in performance, concurrency and ease of use, thus reflecting the characteristics of the cloud native architecture to a great extent.

Data in the data storage can be stored into a plurality of shards (shard), such as "shard 1", "shard 2", "shard M" and "shard N" in FIG 1. One shard corresponds to one computing group. One computing group can correspond to one or more shards. A computing group with a write function writes data into its corresponding shard.

The metadata storage manages metadata of physical tables in the data storage and provides metadata services for a plurality of computing groups, and the plurality of computing groups share the metadata. In other words, each computing group can acquire metadata information of the data stored in each shard in the data storage, so as to read corresponding data. Thus, each computing group can share the data stored in the data storage.

In addition, the metadata storage can also be used to manage computing group configuration information, so as to create, adjust and destroy the computing group flexibly.

As shown in FIG. 1, the data processing system may further include a data engine controller for managing the computing group.

For example, the data engine controller can flexibly perform various management operations on the computing group in response to an instruction of the user or the number (traffic) of task requests.

The data engine controller could create a computing group in response to the instruction of the user and store the computing group configuration information to the metadata storage. The user can configure each computing group according to the needs of applications or scenarios through the data engine controller.

According to requirements, the data engine controller can enable a new computing group to perform corresponding data processing based on the computing group configuration information in the metadata storage.

For a temporarily unnecessary computing group, the data engine controller can suspend it, so that it no longer performs data processing.

For a computing group that is no longer needed, the data engine controller can destroy it and release the computing resources allocated to this computing group to use by other computing groups.

The data engine controller can also assist the user to realize elastic expansion and contraction of the computing resources to adapt to the user's requirements or the change of task request traffic.

### 4. Elasticity.

The computing group can be created, destroyed, or reconfigured as needed at any time. Creating or destroying a computing group does not affect user data stored in the data storage (or data warehouse or data warehousing).

Computing resources can be applied dynamically according to computing requirements, so as to achieve greater resource elasticity. For example, in response to an instruction of the user or the number of task requests, the computing resources, such as the number of CPUs and so on, allocated to a computing group or a computing subgroup (Cluster) can be adjusted by the data engine controller.

The computing group can further expand and contract the computing subgroups (Cluster) according to dynamic automatic elasticity of load. As described above, the computing group can further include computing subgroups. Additionally, for example, a computing subgroup (Cluster) is increased or decreased in the computing group by the data engine controller, and expansions and contractions of computing resources are realized in units of the computing group (Cluster).

Increasing or decreasing the number of resources allocated to a computing group or a computing subgroup, such as the number of CPUs, can be called as "vertical elasticity", "vertical scaling" or "vertical expansion and contraction". Increasing or decreasing the number of computing subgroups in a computing group can be called as "horizontal elasticity", "horizontal scaling" or "horizontal vertical expansion and contraction". Effects of the vertical elasticity and the horizontal elasticity are close and have their own advantages and disadvantages. In some different scenarios, it can be flexibly selected according to needs or application/scenario needs.

The user can directly issue instructions to adjust computing resources, for example, an instruction is to adjust computing resources allocated to a computing group or a computing subgroup, and an instruction is to increase or decrease computing subgroups in a computing group.

Or, the user can flexibly set dynamically adjusted strategies.

For example, a first traffic threshold can be set, and when the number of task requests directed to one computing group is higher than the first traffic threshold, computing resources of the computing group are increased, or computing resources of at least one computing subgroup in the computing group are increased, or computing subgroups are added in the computing group. The user can be provided with options to choose which way to expand the computing resources. The user can also be provided with a setting module, so that the user can set under which situations and in which way to expand the computing resources, so as to expand the computing resources in different situations in corresponding ways.

For another example, a second traffic threshold can be further set, and when the number of task requests directed to one computing group is lower than the second traffic threshold, computing resources of the computing group are reduced, or computing resources of at least one computing subgroup in the computing group are reduced, or computing subgroups in the computing group are reduced. The user can be provided with options to choose which way is used to reduce computing resources. The user can also be provided with a setting module, so that the user can set under which situations and in what way to reduce the computing resources, so as to reduce the computing resources in different situations in corresponding ways.

In this way, flexible configurations as well as expansion and contraction of capacity of the computing group can be realized.

The elasticity of the computing group can bring more cost-effective services to the user, and the user can enjoy faster performance at almost the same cost.

For example, if a certain workload takes 15 hours to execute in 4 computing nodes, it may only take 2 hours to execute in 30 computing nodes. Although costs of these two methods are nearly the same, the experience brought to the user is fundamentally different: at the same cost, the faster the performance, the better the user experiences. The elasticity of the computing group provides a choice of good experience to the user, the user can dynamically configure the computing group to complete computing tasks more quickly without needing extra costs.

In addition to the aforementioned elasticity of the computing group, the data processing system (the data warehouse or the data warehousing) of the present disclosure has a natural computing and storage separation architecture, so it can further achieve high scalability in both computing and storage at the same time, with dual elasticity.

### 5. Row-column coexistence.

At present, when storing data in a physical table, it is often necessary to store the data in a form of rows, that is, row storage, and it is also necessary to store the data in a form of columns, that is, column storage. Row storage data and column storage data have their own advantages and disadvantages, which can be applied to different application scenarios. For example, when performing point query processing, it is more convenient to use row storage data. When analyzing data, it is often more convenient to use column storage data.

In a conventional data writing solution, for the same piece of data, a row storage writing task and a column storage writing task are used to execute a data row storage and a data column storage respectively. Life cycles of these two tasks are managed respectively, and when one task is completed, it is uncertain whether another task has also been completed. The synchronization and simultaneous validity of row data and column data cannot be guaranteed.

However, in an embodiment of the data processing solution according to the present disclosure, an innovative row-column coexistence method is adopted. Physical tables can store data in a way of row-column coexistence. The row-column coexistence refers to the computing group writing row data and column data corresponding to the same data into the same physical table through a writing task. The writing task is not ended until both the row data and the column data have been written. Therefore, the atomicity of a row data writing operation and a column data writing operation corresponding to the same data can be guaranteed, that is, they take effect at the same time.

In other words, a piece of data is stored in two coexisting formats: the row storage and the column storage. When data is read and written, the row storage and the column storage take effect atomically at the same time. The user only needs to care about data writing and reading itself.

The user no longer needs to create multiple tables at the same time and write into multiple tables at the same time to achieve the above effects. Therefore, many problems such as resource overhead, mutual influence of resources and data consistency caused by multiple writes can be avoided.

When the user makes a query, the data processing system can intelligently generate an optimized plan (Plan) for querying: when performing a point check, generating a plan of taking row storage point check, and when performing analysis, generating a plan of taking column storage.

When performing analysis, for example, when the user needs both row storage point check analysis and column storage multi-dimensional analysis at the same time, the system further can intelligently analyze whether it is better to take a point check plan for some querying tasks, and then generate a plan that can check both row storage data and column storage data at the same time, without having to look up two tables at the same time, so as to truly realize the integration of analysis and service for one piece of data.

For example, in some existing data warehouse engine solutions, the user needs to create and write into two tables at the same time to achieve the effect of storing row data and column data at the same time, which will bring extra resource overhead of two writes and require the user to ensure the data consistency of the two tables.

Accordingly, using such an existing data warehouse engine, when the user needs both the row storage point check analysis and the column storage multi-dimensional analysis at the same time, he needs to look up two tables at the same time, and an optimized plan may not be intelligently generated, which cannot truly realize the integration of analysis and service for one piece of data for the user.

However, the embodiment of the present disclosure solves such technical problems through the aforementioned innovative row-column coexistence solution.

In addition, another way to store row data and column data at the same time can be realized, which can be called as "row-column hybrid storage". That is, only one piece of data is stored formally, and a certain amount of data is defined as a data block (block), and the data in a certain column in the data block is stored in a column format. Different columns of the same data block are stored continuously. Described visually, as if this data block defined a multi-row and multi-column table. However, this implementation method is not as good as the aforementioned row-column coexistence method in performance.

### 6. High availability.

In the data storage system (data warehouse) of the present disclosure, unavailability or faults of nodes, computing subgroups and computing groups can be tolerated. Further, disaster tolerance instances of combining data warehouse systems and so on can realize the tolerance of unavailability at the cluster (AZ)/regional level, and provide a greater degree of high availability for the user.

Specifically, in response to unavailability of the computing group, in a case that other computing groups performing the same task exist, a task request directed to an unavailable computing group is redirected to a computing group performing the same task. Or, for example, in a case that other computing groups performing the same task do not exist, a new computing group can be enabled based on computing group configuration information of the unavailable computing group in the metadata storage, to perform a corresponding task request.

In response to unavailability of a computing subgroup in the computing group, in a case that other computing subgroups are available in the computing group, a task request directed to the unavailable computing subgroup can be switched to other computing subgroups in the computing group. In a case that there are no other computing subgroups available in the computing group or tasks allocated to other computing subgroups are busy, a new computing subgroup can be created within the computing group.

In response to unavailability of a computing node in the computing group, a task request directed to the unavailable computing node can be switched to other computing nodes in the computing group, and the first memory table and/or the second memory table already existed in the unavailable computing node are rebuilt in other computing nodes. In this way, after the node fails (Failover), a query can be quickly switched to other normal nodes, which can greatly reduce the impact of node failures on user queries, thus achieving high availability for queries within the computing group.

In addition, if computing resources in the computing group or the computing subgroup are insufficient due to the unavailability of computing nodes, as described above, the computing resources allocated to the computing group or the computing subgroup, such as the computing nodes or the CPU, can be dynamically adjusted.

### 7. Data processing method.

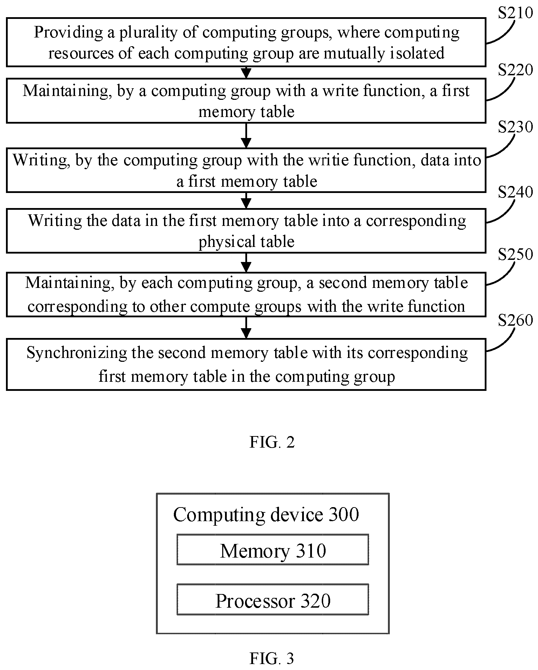

A data processing method that can be executed by the above data processing system according to the present disclosure will be described below with reference to FIG. 2.

FIG. 2 schematically shows a flowchart of a data processing method according to the present disclosure.

As shown in FIG. 2, in step S210, a plurality of computing groups are provided, where computing resources of each computing group are mutually isolated.

In step S220, maintaining, by a computing group with a write function in the plurality of computing groups, a first memory table.

In step S230, writing, by the computing group with the write function, data to be stored into a data storage into a first memory table.

In step S240, writing, by the computing group with the write function, the data in the first memory table into a physical table in the data storage corresponding to the first memory table.

Here, the data can be stored in the physical table in a way of row-column coexistence, and row data and column data corresponding to the same data can be written into the same physical table through a writing task, so as to ensure the atomicity of a row data writing operation and a column data writing operation corresponding to the same data.

In step S250, maintaining, by each computing group, at least one second memory table respectively, where each second memory table corresponds to other computing groups with a write function.

In step S260, synchronizing the second memory table with its corresponding first memory table in the computing group.

As a result, data sharing is realized between computing groups with isolated computing resources.

Further, various operations can be performed on the computing group, for example, in response to an instruction of the user or the number of task requests.

For example, a computing group can be created, and computing group configuration information is stored into a metadata storage.

A new computing group can be further enabled based on the computing group configuration information in the metadata storage, to perform corresponding data processing.

The computing group can be further suspended, so that the computing group no longer performs the data processing.

The computing group can be further destroyed, and computing resources allocated to the computing group are released.

Therefore, the computing group can be managed flexibly.

In addition, the computing resources allocated to the computing group can also be adjusted.

Or, computing resources allocated to each computing subgroup in the computing group can also be adjusted.

Computing subgroups in the computing group can also be added or reduced. The computing resources of each computing subgroup are mutually isolated, and respectively maintain the first memory table and/or the second memory table.

Therefore, elastic scaling of computing resources can be flexibly realized.

Further, high availability can be realized at various levels, and unavailability or faults of nodes, computing subgroups and computing groups can be tolerated.

For example, in response to unavailability of the computing group, in a case that other computing groups performing the same task exist, a task request directed to an unavailable computing group is redirected to a computing group performing the same task. Or, a new computing group can be enabled based on computing group configuration information of the unavailable computing group in the metadata storage, to perform a corresponding task request.

In response to unavailability of a computing subgroup in the computing group, in a case that other computing subgroups are available in the computing group, a task request directed to the unavailable computing subgroup is switched to other computing subgroups in the computing group. In a case that there are no other computing subgroups available in the computing group or tasks allocated to other computing subgroups are busy, a new computing subgroup is created within the computing group.

In response to unavailability of a computing node in the computing group, a task request directed to the unavailable computing node can be switched to other computing nodes in the computing group, and the first memory table and/or the second memory table already existed in the unavailable computing node are rebuilt in other computing nodes. In this way, after the node fails (Failover), a query can be quickly switched to other normal nodes, which can greatly reduce the impact of node failures on user queries, thus achieving high availability for queries within the computing group.

In addition, if computing resources in the computing group or the computing subgroup are insufficient due to the unavailability of computing nodes, as described above, the computing resources allocated to the computing group or the computing subgroup, such as the computing nodes or the CPU, can be dynamically adjusted.

Thus, the present disclosure provides the new data processing system architecture, which can also be called as a "real-time data warehouse architecture" in some embodiments, and truly realizes the integration of analysis and service of the data for users. Moreover, a real-time scenario, an analysis scenario, a service scenario, an offline processing scenario and many other scenarios can be completely isolated, so that high-throughput writing and flexible query do not interfere with each other, and while the service query QPS increases, query jitter can be significantly decreased, effectively solving the problem of system load conflict in different scenarios, greatly reducing uncontrollable risks that may occur, and realizing high availability of services.

The data processing system of the embodiment of the present disclosure can provide high usability, high operability and high reliability for users. It not only has the characteristics of flexibility (that is, ready to use upon purchase), high availability, resource isolation, high elasticity and strong expansibility, but also supports transactions, standard SQL syntax, and semi-structured and unstructured data, so as to solve many problems with pain points and difficulties of users in data analysis as much as possible, so that "data value" is no longer beyond reach, but is getting closer to reality, sounding a clarion of the data value.

FIG. 3 shows a schematic structural diagram of a computing device that can be used to implement the above data processing method according to an embodiment of the present invention

Referring to FIG. 3, the computing device 300 includes a memory 310 and a processor 320.

The processor 320 could be a multi-core processor, and could also include multiple processors. In some embodiments, the processor 320 could include a general main processor and one or more special coprocessors, such as a graphics processor unit (GPU), a digital signal processor (DSP), etc. In some embodiments, the processor 320 could be implemented using a customized circuit, such as an application specific integrated circuit (ASIC, Application Specific Integrated Circuit) or a field programmable gate array (FPGA, Field Programmable Gate Arrays).

The memory 310 could include various types of storage units, such as a system memory, a read-only memory (ROM), and a permanent storage device. The ROM can store static data or instructions needed by the processor 320 or other modules of the computer. The permanent storage device can be a readable-writable storage device. The permanent storage device can be a nonvolatile storage device that will not lose stored instructions and data even if the computer is powered off. In some implementations, the permanent storage device adopts a mass storage device (e.g., a magnetic or optical disk, flash memory) as the permanent storage device. In other implementations, the permanent storage device could be a removable storage device (e.g., a floppy disk, an optical drive). A system memory could be a readable-writable storage device or a volatile readable-writable storage device, such as a dynamic random access memory. The system memory could store instructions and data needed by some or all processors at runtime. In addition, the memory 310 could include any combination of computer-readable storage media, including various types of semiconductor memory chips (a DRAM, a SRAM, a SDRAM, a flash memory, a programmable read-only memory), and magnetic disks and/or optical disks can also be used. In some implementations, the memory 310 could include a removable storage device that could be read and/or written, such as a compact disc (CD), a read-only digital versatile disc (e.g., a DVD-ROM, a dual-layer DVD-ROM), a read-only blue-ray disc, an ultra-density disc, a flash memory card (e.g., a SD card, a min SD card, a Micro-SD card, etc.), a magnetic floppy disk, etc. Computer-readable storage media do not contain carrier waves and instantaneous electronic signals transmitted by wireless or wired.

The memory 310 stores executable codes, where the executable codes, when executed by the processor 320, cause the processor 320 to perform the data processing method described above.

The data processing solutions according to the present invention have been described in detail in the above with reference to the drawings.

Furthermore, the method according to the present invention can also be realized as a computer program or a computer program product, where the computer program or the computer program product includes computer program code instructions for executing the above steps defined in the above method of the present invention.

Or, the present invention can also be implemented as a non-transitory machine-readable storage medium (or a computer-readable storage medium, or a machine-readable storage medium), in which executable codes (or a computer program, or computer instruction codes) are stored, and when the executable codes (or the computer program, or the computer instruction codes) are executed by a processor of an electronic device (or a computing device, a server, etc.), the processor is caused to perform each step of the above method according to the present invention.

Those skilled in the art will further appreciate that various illustrative logical blocks, modules, circuits, and algorithm steps described in connection with the disclosure herein could be implemented as electronic hardware, computer software, or a combination of both.

The flowcharts and block diagrams in the drawings show architectures, functions and operations of possible implementations of systems and methods according to various embodiments of the present invention. In this regard, each block in the flowcharts or block diagrams could represent a module, a program segment or a part of codes, and the module, the program segment or the part of codes contains one or more executable instructions for implementing specified logical functions. It should also be noted that in some alternative implementations, the functions marked in the blocks could also occur in a different order than those marked in the drawings. For example, two consecutive blocks could actually be executed substantially in parallel, and they could sometimes be executed in a reverse order, depending on the functions involved. It should also be noted that each block in the block diagrams and/or the flowcharts, and a combination of blocks in the block diagrams and/or the flowcharts, could be implemented by a dedicated hardware-based system that performs specified functions or operations, or by a combination of dedicated hardware and computer instructions.

Various embodiments of the present invention have been described above, and the above description is exemplary, not exhaustive, and is not limited to the disclosed various embodiments. Many modifications and changes will be obvious to those of ordinary skill in the art without departing from the scope and spirit of the illustrated various embodiments. The choice of terms used herein is intended to best explain principles of various embodiments, practical application or improvement of technology in the market, or to enable other of ordinary skill in the art to understand various embodiments disclosed herein.

## Claims

1. A data processing system, comprising:
a plurality of computing groups, wherein computing resources of each computing group are mutually isolated,
wherein a computing group with a write function maintains a first memory table, and the computing group with the write function is configured to write data to be stored into a data storage into the first memory table, and write the data in the first memory table into a physical table in the data storage corresponding to the first memory table; and
wherein each computing group further maintains at least one second memory table respectively, each second memory table corresponds to a respective first memory table in other computing groups with a write function, and the computing group is configured to synchronize the second memory table with its corresponding first memory table.

2. The data processing system according to claim 1, further comprising:
a gateway, configured to allocate a task request to a computing group corresponding to the task request; and/or
a metadata storage, configured to manage metadata of a physical table in the data storage, and provide metadata services for the plurality of computing groups, wherein the plurality of computing groups share the metadata; and/or
the data storage, configured to store the physical table.

3. The data processing system according to claim 2, wherein the metadata storage is further configured to manage computing group configuration information, and the system further comprises: a data engine controller, configured to, in response to an instruction of a user or the number of task requests, perform at least one of the following operations:
creating a computing group, and storing the computing group configuration information into the metadata storage;
enabling a new computing group to perform corresponding data processing based on the computing group configuration information in the metadata storage;
suspending the computing group, so that the computing group no longer performs the data processing;
destroying the computing group, and releasing computing resources allocated to the computing group;
adjusting the computing resources allocated to the computing group;
adjusting computing resources allocated to each computing subgroup in the computing group; and
adding or reducing computing subgroups in the computing group, wherein the computing resources of each computing subgroup are mutually isolated, and each computing subgroup maintains the first memory table and/or the second memory table respectively.

4. The data processing system according to claim 1, wherein,
the physical table stores data in a way of row-column coexistence, and row data and column data corresponding to the same data are written into the same physical table through a writing task, to ensure atomicity of a row data writing operation and a column data writing operation corresponding to the same data.

5. The data processing system according to claim 1, wherein the computing group comprises at least one of the following:
a computing group for offline writing;
a computing group for real-time writing;
a computing group for providing a data query service; and
a computing group for providing a data analysis service.

6. The data processing system according to claim 1, wherein,
the computing group with the write function maintains a plurality of first memory tables, wherein the plurality of first memory tables in the data storage correspond to a plurality of physical tables;
each computing group maintains a corresponding number of second memory tables, to correspond to a plurality of first memory tables in other computing groups with the write function.

7. The data processing system according to claim 1, wherein,
in response to unavailability of the computing group, in a case that other computing groups performing the same task exist, a task request directed to an unavailable computing group is redirected to a computing group performing the same task, or a new computing group is enabled based on computing group configuration information of the unavailable computing group in the metadata storage to perform a corresponding task request; and/or
in response to unavailability of a computing subgroup in the computing group, a new computing subgroup is created in the computing group and/or a task request directed to the unavailable computing subgroup is switched to other computing subgroups in the computing group; and/or
in response to unavailability of a computing node in the computing group, a task request directing to the unavailable computing node is switched to other computing nodes in the computing group, and the first memory table and/or the second memory table already existed in the unavailable computing node are rebuilt in other computing nodes.

8. A data processing method, comprising:
providing a plurality of computing groups, wherein computing resources of each computing group are mutually isolated;
maintaining, by a computing group with a write function, a first memory table;
writing, by the computing group with the write function, data to be stored into a data storage into a first memory table, and writing the data in the first memory table into a physical table in the data storage corresponding to the first memory table;
maintaining, by each computing group, at least one second memory table respectively, wherein each second memory table corresponds to other computing groups with a write function; and
synchronizing the second memory table with its corresponding first memory table in the computing group.

9. The data processing method according to claim 8, further comprising: in response to an instruction of a user or the number of task requests, performing at least one of the following operations:
creating a computing group, and storing computing group configuration information into a metadata storage;
enabling a new computing group to perform corresponding data processing based on the computing group configuration information in the metadata storage;
suspending the computing group, so that the computing group no longer performs the data processing;
destroying the computing group, and releasing computing resources allocated to the computing group;
adjusting the computing resources allocated to the computing group;
adjusting computing resources allocated to each computing subgroup in the computing group; and
adding or reducing computing subgroups in the computing group, wherein the computing resources of each computing subgroup are mutually isolated, and each computing subgroup maintains the first memory table and/or the second memory table respectively.

10. The data processing method according to claim 9, wherein,
the physical table stores data in a way of row-column coexistence, and row data and column data corresponding to the same data are written into the same physical table through a writing task, to ensure atomicity of a row data writing operation and a column data writing operation corresponding to the same data.

11. The data processing method according to claim 8, further comprising:
in response to unavailability of the computing group, in a case that other computing groups performing the same task exist, redirecting a task request directed to an unavailable computing group to a computing group performing the same task, or enabling a new computing group based on computing group configuration information of the unavailable computing group in the metadata storage to perform a corresponding task request; and/or
in response to unavailability of a computing subgroup in the computing group, creating a new computing subgroup in the computing group and/or switching a task request directed to the unavailable computing subgroup to other computing subgroups in the computing group; and/or
in response to unavailability of a computing node in the computing group, switching a task request directed to the unavailable computing node to other computing nodes in the computing group, and rebuilding the first memory table and/or the second memory table already existed in the unavailable computing node in other computing nodes.

12. A computing device, comprising:
a processor; and
a memory, storing executable codes, wherein the executable codes, when executed by the processor, cause the processor to perform the method according to any one of claims 8-11mutually isolated.

13. A computer program product, comprising executable codes, wherein the executable codes, when executed by a processor of an electronic device, cause the processor to perform the method according to any one of claims 8-11.

14. A non-transitory machine-readable storage medium, storing executable codes, wherein the executable codes, when executed by a processor of an electronic device, cause the processor to perform the method according to any one of claims 8-11.
